(19) Europäisches Patentamt
European Patent Office
Office européen des brevets

(11) **EP 3 837 762 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **19746467.0**

(22) Anmeldetag: **29.07.2019**

(51) Internationale Patentklassifikation (IPC):
*H02P 21/00* (2016.01)     *H02P 25/022* (2016.01)
*H02P 29/032* (2016.01)     *B60L 7/00* (2006.01)
*H02P 29/40* (2016.01)     *B60L 3/12* (2006.01)
*B60L 50/14* (2019.01)

(52) Gemeinsame Patentklassifikation (CPC):
**H02P 21/00; B60L 3/12; B60L 50/14; H02P 25/022; H02P 29/032;** B60L 2220/14; B60L 2240/427; B60L 2240/429; Y02T 10/7072

(86) Internationale Anmeldenummer:
**PCT/EP2019/070314**

(87) Internationale Veröffentlichungsnummer:
**WO 2020/035293 (20.02.2020 Gazette 2020/08)**

(54) **VERFAHREN ZUM BETREIBEN EINES PERMANENTMAGNETERREGTEN SYNCHRONMOTORS, MOTORANORDNUNG UND SPEICHERMEDIUM**

METHOD FOR OPERATING A SYNCHRONOUS MOTOR EXCITED BY PERMANENT MAGNETS, MOTOR ARRANGEMENT, AND STORAGE MEDIUM

PROCÉDÉ POUR FAIRE FONCTIONNER UN MOTEUR SYNCHRONE EXCITÉ PAR AIMANT PERMANENT, ENSEMBLE MOTEUR ET SUPPORT DE STOCKAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2018 DE 102018213939**

(43) Veröffentlichungstag der Anmeldung:
**23.06.2021 Patentblatt 2021/25**

(73) Patentinhaber: **Continental Automotive Technologies GmbH**
**30175 Hannover (DE)**

(72) Erfinder:
• **SCHULTE, Dominik**
**60488 Frankfurt am Main (DE)**

• **BUDIANU, Bogdan**
**60488 Frankfurt am Main (DE)**
• **BARTEL, Eugen**
**60488 Frankfurt am Main (DE)**
• **KAUFMANN, Tom**
**60488 Frankfurt am Main (DE)**

(74) Vertreter: **Continental Corporation**
**c/o Continental Automotive Technologies GmbH**
**Intellectual Property**
**Guerickestraße 7**
**60488 Frankfurt a. Main (DE)**

(56) Entgegenhaltungen:
**EP-A1- 2 195 920**     **EP-A1- 2 632 038**
**EP-B1- 2 195 920**     **WO-A1-2005/069478**
**US-A1- 2015 198 930**

EP 3 837 762 B1

**Beschreibung**

Die Erfindung betrifft ein Verfahren zum Betreiben eines permanentmagneterregten Synchronmotors sowie eine Motoranordnung und ein Speichermedium zum Ausführen eines solchen Verfahrens.

Permanentmagneterregte Synchronmotoren können in Kraftfahrzeugen beispielsweise verwendet werden, um einen Druck in einem Bremssystem zu erzeugen. Ein solcher Motor wird typischerweise über ein Bordnetz des Kraftfahrzeugs versorgt, in welchem sich eine Vielzahl von Komponenten befinden, welche eine jeweilige Leistungsquelle oder Leistungssenke darstellen. Zum stabilen Betrieb eines solchen Bordnetzes ist es typischerweise erforderlich, einen Ausgleich zwischen Stromerzeugung und Stromverbrauch zu erreichen. Dies kann es erfordern, dass bei Stromverbrauchern wie beispielsweise einem permanentmagneterregten Synchronmotor die insgesamt verbrauchte Leistung limitiert wird. Eine solche Leistung kann beispielsweise dadurch berechnet werden, dass eine Betriebsspannung des Bordnetzes mit einem maximal zulässigen Strom multipliziert wird. Insbesondere der maximal zulässige Strom kann sich dabei auch je nach Betriebszustand des Bordnetzes verändern.

Hierdurch kann es erforderlich werden, den Betrieb eines permanentmagneterregten Synchronmotors so anzupassen, dass er nicht mehr als die maximal zulässige Leistung verbraucht. Hierzu gibt es bereits verschiedene Ansätze, welche im Stand der Technik bekannt sind. Einer geht beispielsweise von einer gemessenen Leistung aus und passt Motorparameter so an, dass die maximal zulässige Leistung nicht überschritten wird. Ein anderer Ansatz verwendet ein vorab definiertes Motormodell.

EP 2195920 A1 zeigt eine Leistungsbegrenzung eines elektrischen Antriebs sowie eine in die Leistungsbegrenzung eines elektrischen Antriebs integrierte Absicherung eines Aufzugs.

EP 2632038 A1 zeigt einen Schutz einer Gleichstromversorgung und mit der Gleichstromversorgung verbundenen Komponenten.

WO 2005069478 A1 zeigt eine Stromversorgungsvorrichtung, die einen Motor durch Umwandeln des Pegels einer Eingangsgleichspannung antreibt und steuert.

Es ist eine Aufgabe der Erfindung, ein Verfahren zum Betreiben eines permanentmagneterregten Synchronmotors bereitzustellen, welches im Vergleich zum Stand der Technik alternativ, beispielsweise einfacher, ausgeführt ist. Es sind des Weiteren Aufgaben der Erfindung, eine zugehörige Motoranordnung sowie ein zugehöriges Speichermedium bereitzustellen.

Dies wird erfindungsgemäß durch ein Verfahren, eine Motoranordnung sowie ein nichtflüchtiges computerlesbares Speichermedium gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Betreiben eines permanentmagneterregten Synchronmotors, wobei das Verfahren folgende Schritte aufweist:

- Festlegen einer Maximalleistung,
- Bestimmen eines Stromvektors im dq-Koordinatensystem,
- Bestimmen eines Ausgangsspannungsvektors im dq-Koordinatensystem,
- Berechnen eines Sollbetrags für einen Sollspannungsvektor basierend auf der Maximalleistung, dem Stromvektor und dem Ausgangsspannungsvektor,
- Erzeugen des Sollspannungsvektors mit dem Sollbetrag, und anschließend
- Betreiben des permanentmagneterregten Synchronmotors zumindest mit dem Sollspannungsvektor.

Das hierin beschriebene Verfahren basiert auf einfachen Zusammenhängen, welche die Erfinder der vorliegenden Anmeldung erkannt haben und welche sich zur Leistungsbegrenzung eines permanentmagneterregten Synchronmotors in einfacher Weise einsetzen lassen. Auf einen Umweg über eine Leistungsmessung kann dabei ebenso verzichtet werden wie auf die Implementierung komplexer Motormodelle. Insbesondere wird der Sollspannungsvektor bei dem erfindungsgemäßen Verfahren mit einem Sollbetrag erzeugt, welcher eine Einhaltung einer Maximalleistung sicherstellt.

Das dq-Koordinatensystem ist im Bereich der Ansteuerung von permanentmagneterregten Synchronmotoren allgemein bekannt und bietet eine einfache Darstellung der Betriebsparameter eines solchen Motors.

Erfindungsgemäß wird ein Winkel des Sollspannungsvektors gleich dem Winkel des Ausgangsspannungsvektors gesetzt. Hierbei handelt es sich jeweils um den Winkel im dq-Koordinatensystem. Anders ausgedrückt wird der Sollspannungsvektor parallel zum Ausgangsspannungsvektor gesetzt. Dies trägt der Tatsache Rechnung, dass der Winkel des Ausgangsspannungsvektors typischerweise auch dann erhalten bleiben soll, wenn der Betrag des Ausgangsspannungsvektors aufgrund einer Leitungsbegrenzung, welche bei der Berechnung des Ausgangsspannungsvektors noch nicht berücksichtigt wurde, verringert werden soll.

Die Maximalleistung kann bevorzugt als Produkt aus einer vorgegebenen Spannung und einer vorgegebenen Maximalstromstärke festgelegt werden. Die vorgegebene Spannung kann dabei insbesondere einer Betriebsspannung eines Bordnetzes entsprechen, beispielsweise eines Bordnetzes eines Kraftfahrzeugs. Die Betriebsspannung ist dabei typischerweise die Spannung, deren Einhaltung im Normalbetrieb gewünscht ist. Die vorgegebene Maximalstromstärke kann gemäß einer Ausführung festgelegt sein, kann jedoch gemäß einer alternativen Ausführung auch variabel berechnet werden. Dies kann beispielsweise abhängig von diversen Betriebszuständen wie beispielsweise der Verfügbarkeit von Stromerzeugern oder dem Betriebszustand von anderen Stromverbrauchern erfolgen.

Gemäß einer Ausführung wird der Stromvektor basierend auf einer Drehmomentanforderung oder basierend auf einer Leistungsbegrenzung und einer Drehmomentanforderung bestimmt. Die Drehmomentanforderung ist dabei typischerweise eine Vorgabe, welches Drehmoment der Motor zu einem bestimmten Zeitpunkt erzeugen soll. Hieraus lässt sich typischerweise ein Stromvektor im dq-Koordinatensystem berechnen, wobei gegebenenfalls auch eine Leistungsbegrenzung berücksichtigt werden kann.

Gemäß einer Ausführung wird der Stromvektor basierend auf gemessenen, durch den permanentmagneterregten Synchronmotor fließenden Strömen bestimmt. Dies stellt eine weitere Möglichkeit zum Erhalten des Stromvektors dar, wobei aus derartigen Strömen typischerweise auf den Stromvektor im dq-Koordinatensystem zurückgerechnet werden kann.

Es sei verstanden, dass die beiden vorgestellten Möglichkeiten zum Bestimmen des Stromvektors auch kombiniert werden können, wobei beispielsweise eine gegenseitige Plausibilisierung verwendet werden kann, oder es kann auch je nach Betriebszustand die eine oder die andere Möglichkeit verwendet werden.

Gemäß einer bevorzugten Ausführung wird der Ausgangsspannungsvektor im dq-Koordinatensystem basierend auf einer Drehmomentanforderung, oder basierend auf einer Leistungsbegrenzung und einer Drehmomentanforderung, und/oder basierend auf dem Stromvektor bestimmt. Dies sind gängige Möglichkeiten zum Erhalten des Ausgangsspannungsvektors, welcher in dem hierin beschriebenen Verfahren insbesondere einen Spannungsvektor darstellt, der unabhängig oder zumindest weitgehend unabhängig von einer vorgegebenen Maximalleistung oder Leistungsbegrenzung wünschenswert wäre. Anders ausgedrückt stellt der Ausgangsspannungsvektor denjenigen Spannungsvektor dar, welcher verwendet werden würde, wenn der Motor eine beliebige Leistung verbrauchen dürfte.

Gemäß einer bevorzugten Ausführung wird der Sollbetrag als Produkt aus dem Faktor 2/3 mit einem Quotienten mit Dividend und Divisor berechnet. Der Dividend ist dabei bevorzugt ein Produkt aus der Maximalleistung und dem Betrag des Ausgangsspannungsvektors. Der Divisor ist bevorzugt eine Summe aus dem Produkt der d-Komponenten von Ausgangsspannungsvektor und Stromvektor einerseits und dem Produkt der q-Komponenten von Ausgangsspannungsvektor und Stromvektor andererseits. Diese Vorgehensweise hat sich als einfache und zielführende Berechnungsweise für den Sollbetrag erwiesen. Eine Herleitung der darin enthaltenen Formel erfolgt weiter unten in dieser Anmeldung. Es sei verstanden, dass bei den hierin angegebenen Berechnungen grundsätzlich die mathematische Regel "Punkt vor Strich" zu beachten ist.

Die Erfindung betrifft des Weiteren eine Motoranordnung. Die Motoranordnung weist einen permanentmagneterregten Synchronmotor auf. Die Motoranordnung weist einen Inverter zur Ansteuerung des permanentmagneterregten Synchronmotors auf. Ferner weist die Motoranordnung eine elektronische Steuerungsvorrichtung gemäß der Erfindung auf. Dabei kann auf alle hierin beschriebenen Ausführungen und Varianten zurückgegriffen werden.

Mittels der erfindungsgemäßen Motoranordnung sind die weiter oben bereits beschriebenen Vorteile für eine Motoranordnung erreichbar.

Die Erfindung betrifft des Weiteren ein nichtflüchtiges computerlesbares Speichermedium, welches Programmcode zur Ausführung eines erfindungsgemäßen Verfahrens enthält. Dabei kann auf alle hierin beschriebenen Ausführungen und Varianten zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigen:

Fig. 1: eine Motoranordnung, und
Fig. 2: ein Ablaufdiagramm.

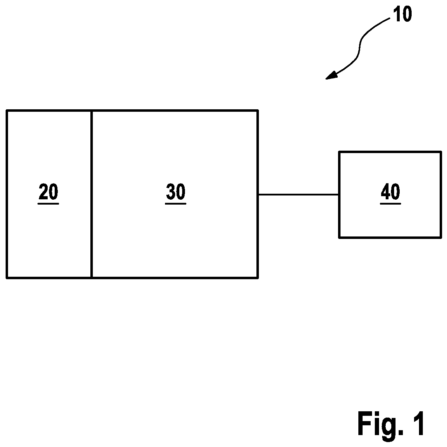

Fig. 1 zeigt eine Motoranordnung 10 gemäß einem Ausführungsbeispiel der Erfindung. Die Motoranordnung 10 weist eine Steuerungsvorrichtung 20, einen Inverter 30 sowie einen permanentmagneterregten Synchronmotor 40 auf. Die Steuerungsvorrichtung 20 ist dazu ausgebildet, den Inverter 30 anzusteuern, welcher wiederum den Motor 40 ansteuert und ihn somit sowohl mit Leistung versorgt wie auch seinen gewünschten Betrieb, insbesondere ein gewünschtes Drehmoment, vorgibt.

Die Steuerungsvorrichtung 20 ist insbesondere konfiguriert, ein erfindungsgemäßes Verfahren auszuführen. Dies basiert auf den nachfolgenden Überlegungen.

Der Leistungsverbrauch eines permanentmagneterregten Synchronmotors ist grundsätzlich folgendermaßen zu berechnen:

$$U_{DC}I_{DC} = \frac{3}{2}\left(U_d I_d + U_q I_q\right)$$

Dabei bezeichnen:

$U_{DC}$: eine anliegende Spannung, welche insbesondere eine vorgegebene Bordnetzspannung sein kann,

$I_{DC}$: einen vorgegebenen Maximalstrom,

$U_d$: eine d-Komponente eines tatsächlich verwendeten Spannungsvektors im dq-Koordinatensystem,

$I_d$: eine d-Komponente eines tatsächlich verwendeten Stromvektors im dq-Koordinatensystem,

$U_q$: eine q-Komponente des tatsächlich verwendeten Spannungsvektors im dq-Koordinatensystem, und

$I_q$: eine q-Komponente des tatsächlich verwendeten Stromvektors im dq-Koordinatensystem.

Diese Formel lässt sich umformen, wenn man statt der d- und q-Komponenten die Beträge der Vektoren und den Zwischenwinkel betrachtet:

$$U_{DC} I_{DC} = \frac{3}{2} |U_{dq}| |I_{dq}| \cos(phi)$$

Dabei bezeichnen:

$U_{dq}$: den tatsächlich verwendeten Spannungsvektor,
$I_{dq}$: den tatsächlich verwendeten Stromvektor, und
phi: den Zwischenwinkel zwischen $U_{dq}$ und $I_{dq}$.

Diese Gleichung lässt sich nach der Spannung auflösen:

$$|U_{dq}| = \frac{2}{3} \frac{U_{DC} I_{DC}}{|I_{dq}| \cos(phi)}$$

Hierdurch wird eine einfache Beziehung zwischen einer vorgegebenen Maximalleistung, welche durch das Produkt aus $U_{DC}$ und $I_{DC}$ angegeben ist, dem Betrag des Stromvektors, dem Winkel phi sowie dem Betrag eines Spannungsvektors angegeben. Nachfolgend wird darauf eingegangen, wie sich dieser Zusammenhang in einer Motorsteuerung verwenden lässt.

In einer Steuerung eines permanentmagneterregten Synchronomotors kann beispielsweise eine Stromsteuerung verwendet werden, oder es kann eine modellbasierte Vorausberechnung verwendet werden, um Motorströme durch das Festlegen von dq-Spannungen einzustellen. Somit kann ein Stromvektor beispielsweise auf Messungen oder auch auf einem Vorgabewert basieren. Insbesondere kann zunächst ein Ausgangsspannungsvektor $U^*_{dq}$ berechnet werden, welcher denjenigen Spannungsvektor darstellt, der ohne Berücksichtigung einer Leistungsbegrenzung wünschenswert wäre. Typischerweise basiert ein solcher Ausgangsspannungsvektor $U^*_{dq}$ auf einer Drehmomentanforderung.

Der Zwischenwinkel phi lässt sich in diesem Fall folgendermaßen berechnen:

$$\cos(phi) = \frac{U^*_d I_d + U^*_q I_q}{|I_{dq}| |U^*_{dq}|}$$

Dabei bezeichnen:

$U^*_d$: eine d-Komponente des Ausgangsspannungsvektors und

$U^*_q$: eine q-Komponente des Ausgangsspannungsvektors.

Wird diese Formel für den Kosinus des Zwischenwinkels phi in die weiter oben bereits erwähnte Gleichung zur Berechnung des Sollbetrags des Spannungsvektors eingesetzt, so ergibt sich foglende Formel:

$$|U_{dq}| = \frac{2}{3} \frac{U_{DC} I_{DC} |U^*_{dq}|}{U^*_d I_d + U^*_q I_q}$$

Somit kann ein Betrag eines Spannungsvektors berechnet werden, welcher auf einem berechneten oder gemessenen Stromvektor $I_{dq}$ sowie einem berechneten Ausgangsspannungsvektor $U^*_{dq}$ basiert und gleichzeitig die bereits weiter oben angegebene Leistungsbegrenzung berücksichtigt. Dieser Sollbetrag $|U_{dq}|$ kann insbesondere verwendet werden, wenn der entsprechend der obigen Formel berechnete Winkel phi dabei gleich gelassen wird. Somit ergibt sich ein minimaler Eingriff in die Motorparameter, welche nur insoweit verändert werden, als dies zwingend erforderlich ist, um die vorgegebene Maximalleistung zu erfüllen.

Zurückkommend auf das in Fig. 1 dargestellte Ausführungsbeispiel berechnet also die Steuerungsvorrichtung 20 sowohl den Zwischenwinkel phi wie auch den Ausgangsspannungsvektor $U^*_{dq}$ und den Sollbetrag eines Spannungsvektors wie eben angegeben, wobei entweder auf einen berechneten oder auf einen gemessenen Stromvektor $I_{dq}$ zurückgegriffen werden kann. Der Ausgangsspannungsvektor $U^*_{dq}$ wird dann winkelmäßig konstant gelassen, jedoch sofern notwendig hinsichtlich seines Betrags soweit verändert, dass sein Betrag dem Sollbetrag $|U_{dq}|$ entspricht. Damit wird dann der Inverter 30 und letztlich auch der Motor 40 angesteuert. Eine Einhaltung einer Leitungsbegrenzung ist somit sichergestellt, wobei trotzdem eine typischerweise von extern vorgegebene Drehmomentanforderung soweit erfüllt ist, wie dies angesichts der Leistungsbegrenzung möglich ist.

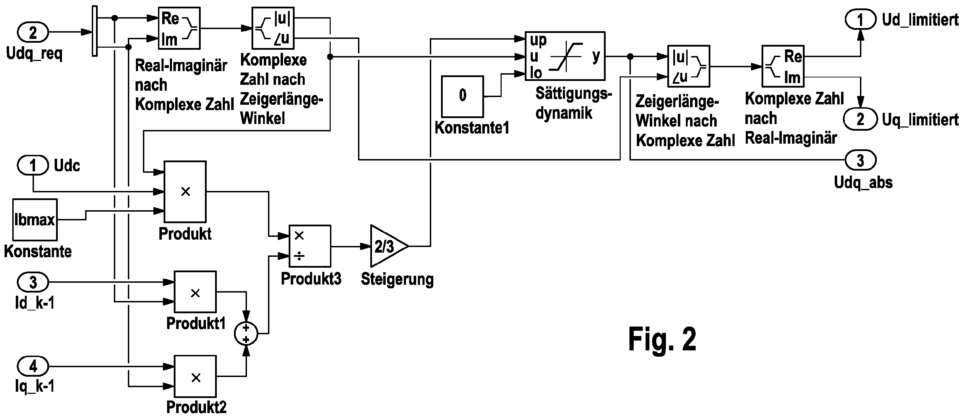

Fig. 2 zeigt das Vorgehen bei der Berechnung des Sollspannungsvektors bzw. dessen Betrags in einer schematischen Übersicht. Dabei geht insbesondere ein Ausgangsspannungsvektor $U_{dq}$_rec oben links ein. Außerdem geht unten links der Stromvektor $I_{dq}$ mit seinen d- und q-Koordinaten ein. Dazwischen ist zu erkennen, dass die Maximalleistung in Form einer Spannung $U_{DC}$ sowie einem Maximalstrom $I_{bmax}$ eingeht. Rechts in der Darstellung von Fig. 2 ist zu erkennen, dass die limitierten Werte des Spannungsvektors ausgegeben werden.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen.

**Patentansprüche**

1.  Verfahren zum Betreiben eines permanentmagneterregten Synchronmotors (40), wobei das Verfahren folgende Schritte aufweist:

    - Festlegen einer Maximalleistung,
    - Bestimmen eines Stromvektors ($\mathbf{I_{dq}}$) im dq-Koordinatensystem,
    - Bestimmen eines Ausgangsspannungsvektors ($\mathbf{U^*_{dq}}$) im dq-Koordinatensystem,
    - Berechnen eines Sollbetrags ($|U_{dq}|$) für einen Sollspannungsvektor basierend auf der Maximalleistung, dem Stromvektor ($\mathbf{I_{dq}}$) und dem Ausgangsspannungsvektor ($U^*_{dq}$),
    - Erzeugen des Sollspanungsvektors mit dem Sollbetrag ($|U_{dq}|$), und anschließend
    - Betreiben des permanentmagneterregten Synchronmotors (40) zumindest mit dem Sollspannungsvektor, **dadurch gekennzeichnet, dass**

    ein Winkel des Sollspannungsvektors gleich dem Winkel des Ausgangsspannungsvektors ($U^*_{dq}$) gesetzt wird.

2.  Verfahren nach Anspruch 1,

    - wobei die Maximalleistung als Produkt aus einer vorgegebenen Spannung und einer vorgegebenen Maximalstromstärke ($\mathbf{I_{bmax}}$) festgelegt

wird.

3.  Verfahren nach einem der vorhergehenden Ansprüche,

    - wobei der Stromvektor ($\mathbf{I_{dq}}$) basierend auf einer Drehmomentanforderung, oder basierend auf einer Leistungsbegrenzung und einer Drehmomentanforderung, bestimmt wird.

4.  Verfahren nach einem der Ansprüche 1 oder 2,

    - wobei der Stromvektor ($\mathbf{I_{dq}}$) basierend auf gemessenen, durch den permanentmagneterregten Synchronmotor (40) fließenden Strömen bestimmt wird.

5.  Verfahren nach einem der vorhergehenden Ansprüche,

    - wobei der Ausgangsspannungsvektor im dq-Koordinatensystem basierend auf einer Drehmomentanforderung, oder basierend auf einer Leistungsbegrenzung und einer Drehmomentanforderung, und/oder basierend auf dem Stromvektor ($\mathbf{I_{dq}}$) bestimmt wird.

6.  Verfahren nach einem der vorhergehenden Ansprüche,

    - wobei der Sollbetrag ($|U_{dq}|$) als Produkt aus dem Faktor 2/3 mit einem Quotienten mit Dividend und Divisor berechnet wird,
    - wobei der Dividend als Produkt aus der Maximalleistung und dem Betrag des Ausgangsspannungsvektors ($U^*_{dq}$) berechnet wird, und
    - wobei der Divisor als Summe aus dem Produkt der d-Komponenten von Ausgangsspannungsvektor ($U^*_{dq}$) und Stromvektor ($\mathbf{I_{dq}}$) einerseits und dem Produkt der q-Komponenten von Ausgangsspannungsvektor ($U^*_{dq}$) und Stromvektor ($\mathbf{I_{dq}}$) andererseits berechnet wird.

7.  Motoranordnung (10), aufweisend:

    - einen permanentmagneterregten Synchronmotor (40),
    - einen Inverter (30) zur Ansteuerung des permanentmagneterregten Synchronmotors (40), und
    - eine elektronische Steuerungsvorrichtung (20) zur Ansteuerung des Inverters (30), wobei die elektronische Steuerungsvorrichtung (20) dazu konfiguriert ist, ein Verfahren nach einem der vorhergehenden Ansprüche auszuführen.

8.  Nichtflüchtiges computerlesbares Speichermedium, welches Programmcode enthält, der bewirkt, dass die elektronische Steuerungsvorrichtung (20) der Motoranordnung (10) nach vorstehendem Anspruch die Verfahrensschritte nach einem der Ansprüche 1 bis 6 ausführt.

## Claims

1. Method for operating a permanent magnet synchronous motor (40), the method comprising the following steps:

   - setting a maximum power,
   - determining a current vector ($I_{dq}$) in the dq coordinate system,
   - determining an output voltage vector ($U^*_{dq}$) in the dq coordinate system,
   - calculating a setpoint amount ($|U_{dq}|$) for a setpoint voltage vector on the basis of the maximum power, the current vector ($I_{dq}$) and the output voltage vector ($U^*dq$),
   - generating the setpoint voltage vector with the setpoint amount ($|U_{dq}|$), and then
   - operating the permanent magnet synchronous motor (40) at least with the setpoint voltage vector, **characterized in that**

   an angle of the setpoint voltage vector is set equal to the angle of the output voltage vector ($U^*_{dq}$).

2. Method according to Claim 1,

   - the maximum power being set as the product of a specified voltage and a specified maximum current intensity ($I_{bmax}$).

3. Method according to one of the preceding claims,

   - the current vector ($I_{dq}$) being determined on the basis of a torque requirement, or on the basis of a power limitation and a torque requirement.

4. Method according to either of Claims 1 and 2,

   - the current vector ($I_{dq}$) being determined on the basis of measured currents flowing through the permanent magnet synchronous motor (40).

5. Method according to one of the preceding claims,

   - the output voltage vector in the dq coordinate system being determined on the basis of a torque requirement, or on the basis of a power limitation and a torque requirement, and/or on the basis of the current vector ($I_{dq}$).

6. Method according to one of the preceding claims,

   - the setpoint amount ($|U_{dq}|$) being calculated as the product of the factor 2/3 with a quotient comprising a dividend and a divisor,
   - the dividend being calculated as the product of the maximum power and the amount of the output voltage vector ($U^*_{dq}$), and
   - the divisor being calculated as the sum of the product of the d components of the output voltage vector ($U^*_{dq}$) and the current vector ($I_{dq}$) on the one hand and the product of the q components of the output voltage vector ($U^*_{dq}$) and the current vector ($I_{dq}$) on the other hand.

7. Motor arrangement (10), comprising:

   - a permanent magnet synchronous motor (40),
   - an inverter (30) for controlling the permanent magnet synchronous motor (40), and
   - an electronic control device (20) for controlling the inverter (30), the electronic control device (20) being configured to carry out a method according to one of the preceding claims.

8. Non-volatile, computer-readable storage medium which contains program code which causes the electronic control device (20) of the motor arrangement (10) according to the preceding claim to carry out the method steps according to one of Claims 1 to 6.

## Revendications

1. Procédé permettant de faire fonctionner un moteur synchrone (40) excité par aimant permanent, le procédé comprenant les étapes suivantes consistant à :

   - définir une puissance maximale,
   - déterminer un vecteur de courant ($I_{dq}$) dans le système de coordonnées dq,
   - déterminer un vecteur de tension de sortie ($U^*_{dq}$) dans le système de coordonnées dq,
   - calculer une grandeur de consigne ($|U_{dq}|$) pour un vecteur de tension de consigne sur la base de la puissance maximale, du vecteur de courant ($I_{dq}$) et du vecteur de tension de sortie ($U^*_{dq}$),
   - produire le vecteur de tension de consigne avec la grandeur de consigne ($|U_{dq}|$), et ensuite
   - faire fonctionner le moteur synchrone (40) excité par aimant permanent au moins avec le vecteur de tension de consigne, **caractérisé en ce que**

   un angle du vecteur de tension de consigne est rendu identique à l'angle du vecteur de tension de consigne ($U^*_{dq}$).

2. Procédé selon la revendication 1,

- dans lequel la puissance maximale est définie comme le produit d'une tension prédéfinie et d'une intensité de courant maximale ($I_{bmax}$) prédéfinie.

3. Procédé selon l'une quelconque des revendications précédentes,

   - dans lequel le vecteur de courant ($I_{dq}$) est déterminé sur la base d'une demande de couple ou sur la base d'une limitation de puissance et d'une demande de couple.

4. Procédé selon l'une quelconque des revendications 1 ou 2,

   - dans lequel le vecteur de courant ($I_{dq}$) est déterminé sur la base de courants mesurés, circulant à travers le moteur synchrone (40) excité par aimant permanent.

5. Procédé selon l'une quelconque des revendications précédentes,

   - dans lequel le vecteur de tension de sortie dans le système de coordonnées dq est déterminé sur la base d'une demande de couple, ou sur la base d'une limitation de puissance et d'une demande de couple, et/ou sur la base du vecteur de courant ($I_{dq}$).

6. Procédé selon l'une quelconque des revendications précédentes,

   - dans lequel la grandeur de consigne ($|U_{dq}|$) est calculée comme le produit du facteur 2/3 et d'un quotient avec dividende et diviseur,
   - dans lequel le dividende est calculé comme le produit de la puissance maximale et de la grandeur du vecteur de tension de sortie ($U^*_{dq}$), et
   - dans lequel le diviseur est calculé comme la somme du produit de la composante d du vecteur de tension de sortie ($U^*_{dq}$) et du vecteur de courant ($I_{dq}$) d'une part, et du produit de la composante q du vecteur de tension de sortie ($U^*_{dq}$) et du vecteur de courant ($I_{dq}$) d'autre part.

7. Agencement de moteur (10), présentant :

   - un moteur synchrone (40) excité par aimant permanent,
   - un onduleur (30) pour piloter le moteur synchrone (40) excité par aimant permanent, et
   - un dispositif de commande électronique (20) pour piloter l'onduleur (30), dans lequel le dispositif de commande électronique (20) est configuré pour exécuter un procédé selon l'une quelconque des revendications précédentes.

8. Support de stockage non volatile, lisible par ordinateur, contenant du code programme qui fait que le dispositif de commande électronique (20) de l'agencement de moteur (10) selon la revendication précédente exécute les étapes de procédé selon l'une quelconque des revendications 1 à 6.

10

20 | 30

40

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2195920 A1
- EP 2632038 A1
- WO 2005069478 A1